(19) Europäisches Patentamt
European Patent Office
Office européen des brevets

(11) **EP 4 459 274 A1**

(12) **EUROPEAN PATENT APPLICATION**

(43) Date of publication:
06.11.2024 Bulletin 2024/45

(51) International Patent Classification (IPC):
*G01N 27/327* (2006.01)

(21) Application number: 24174228.7

(22) Date of filing: 03.05.2024

(52) Cooperative Patent Classification (CPC):
G01N 27/3275

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 04.05.2023 US 202318312113

(71) Applicant: **Analog Devices International Unlimited Company**
**Limerick, V94 N4V2 (IE)**

(72) Inventors:
• **Berney, Helen**
**Limerick, V94 RT99 (IE)**
• **Ponomarev, Youri**
**Limerick, V94 RT99 (IE)**
• **Xia, Junfei**
**Massachusetts, 01887 (US)**
• **Antoine, Christophe**
**Massachusetts, 01887 (US)**
• **Doyle, Richard**
**Limerick, V94 RT99 (IE)**

(74) Representative: **Elkington and Fife LLP**
**Prospect House**
**8 Pembroke Road**
**Sevenoaks, Kent TN13 1XR (GB)**

(54) **SENSOR ASSEMBLY, SYSTEM AND METHOD**

(57)    A sensor assembly for determining a property of an analyte in a sample, where a modification unit comprising a set of modification electrodes with at least a first modification electrode is provided adjacent or on a sensing element, which includes a capture species, and which modification unit is configured modify a property of at least a portion of a sample received on the sensing element.

FIG. 1A

FIG. 1B

**Description**

**FIELD OF THE DISCLOSURE**

This disclosure relates to a sensor assembly, for example a biosensor or chemical assay, for determining a property of an analyte in a sample, and a system and method for determining a property of an analyte in a sample.

**BACKGROUND**

Various biological and chemical assay are known for sensing analytes. Analytes may, for example, include biomarkers, such as hormones, established to assist in patient monitoring and/or diagnosis.

Many of these assays are now carried out using electrical sensors, such as electrochemical sensors. For example, some traditional sensors in these fields use sensing elements with an immobilized capture species provided thereon. These are typically provided on the surfaces of the sensing elements through covalent chemical linkage, covalent-like interactions (e.g. chemisorption of anchor species onto the surface through chemical bond formation) and non-covalent-like interactions (e.g. physisorption of anchor species onto the surface through weaker, often van der Waals, interactions) depending on the identity of the surface and the anchor species. These species are used to capture target analytes, with the binding of analytes causing a change in a measured output (e.g. current).

Although rapid improvements in the selectivity and sensitivity of these sensors have been made over the past decades, there is still a need to improve these, particularly for biological sensing systems. For example, there is a desire to increase the accuracy of the detection of a particular analyte and the time to determine a result. It can also be difficult to differentiate between different biomolecules (such as proteins, DNA, RNA, antibodies) where there are only minor changes, such as mutations. Moreover, binding in these systems can be slow. Often an incubation period is required while the analyte diffuses to the sensing surface, slowing down measurements and limiting applications (such as point-of-care testing).

**SUMMARY OF THE DISCLOSURE**

The present disclosure provides a sensor assembly for determining a property of an analyte in a sample, where a modification unit comprising a set of modification electrodes with at least a first modification electrode is provided adjacent or on a sensing element, which includes a capture species, and which modification unit is configured modify a property of at least a portion of a sample received on the sensing element.

In one aspect, there is provided a sensor assembly for determining a property of an analyte in a sample, the sensor assembly comprising a sensing element comprising a sensing surface, a capture species configured to specifically bind with an analyte provided on the sensing surface, and at least one measurement electrode configured to provide a measurement signal indicative of a property of an analyte in a sample provided on the sensing surface; and a modification unit comprising a set of modification electrodes with at least a first modification electrode provided adjacent or on the sensing element, wherein the set of modification electrodes is configured to modify a property of at least a portion of a sample received on the sensing surface in a region adjacent the sensing surface.

In one aspect, there is provided a system for determining a property of an analyte in a sample, the system comprising: a sensor assembly according to any of the embodiments disclosed herein; and a control unit configured to determine the property of the analyte based on the measurement signal from the sensing element.

In one aspect, there is provided a method for determining a property of an analyte in a sample, the method comprising: providing a sensor assembly for determining a property of an analyte in a sample, the sensor assembly comprising a sensing surface, a capture species configured to specifically bind with an analyte provided on the sensing surface, and at least one measurement electrode configured to provide a measurement signal indicative of a property of an analyte in a sample provided on the sensing surface; providing a sample to the sensing surface; modifying a property of at least a portion of the sample in a region adjacent the sensing surface; and determining a property of analyte in the sample on the sensing surface.

**BRIEF DESCRIPTION OF THE DRAWINGS**

The present invention will now be described in more detail with reference to the accompanying drawings, which are not intended to be limiting:

Fig. 1A provides a schematic plan view of a sensor assembly according to an embodiment and Fig. 1B provides a schematic cross-sectional view of a part of the sensor assembly;
Fig. 2 provides a schematic plan view of a system comprising the sensor assembly of Fig. 1A;
Fig. 3 provides a schematic plan view of a sensor assembly according to an embodiment;
Fig. 4 provides a schematic plan view of a sensor assembly according to an embodiment;
Fig. 5 provides a schematic cross-sectional view of a part of the sensor assembly of Fig. 4;
Fig. 6 provides a schematic plan view of a sensor assembly according to an embodiment;
Fig. 7 provides a schematic cross-sectional view of a part of the sensor assembly of Fig. 6;
Fig. 8 provides a block diagram of a method according to an embodiment;
Fig. 9 provides an example signal response during a method according to an embodiment;
Fig. 10 provides an example signal response during a method according to an embodiment; and
Fig. 11 provides a graph of induced charge for a number of analyte concentrations at different applied voltages.

## DETAILED DESCRIPTION

Electrochemical sensors, including biosensors and chemisensors, are used for various biological and chemical assay are known for sensing analytes in samples. Analytes may, for example, include biomarkers, such as hormones, established to assist in patient monitoring and/or diagnosis.

Although rapid improvements in the selectivity and sensitivity of these sensors have been made over the past decades, there is still a need to improve these, particularly for biological sensing systems. For example, there is a desire to increase the accuracy of the detection of a particular analyte and the time to determine a result. It can be difficult to differentiate between different biomolecules (such as proteins, DNA, RNA, antibodies) where there are only minor changes, such as mutations. Moreover, binding in these systems can be slow. Often an incubation period is required while the analyte diffuses to the sensing surface, slowing down measurements and limiting applications (such as point-of-care testing).

In a first aspect, there is provided a sensor assembly for determining a property of an analyte in a sample, the sensor assembly comprising a sensing element comprising a sensing surface, a capture species configured to specifically bind with an analyte provided on the sensing surface, and at least one measurement electrode configured to provide a measurement signal indicative of a property of an analyte in a sample provided on the sensing surface; and a modification unit comprising a set of modification electrodes with at least a first modification electrode provided adjacent or on the sensing element, wherein the set of modification electrodes is configured to modify a property of at least a portion of a sample received on the sensing surface in a region adjacent the sensing surface.

Embodiments provide a more versatile sensor assembly (or "sensing assembly") which can locally modify a property (or "environmental property") of a sample on a sensing surface so as to improve a measurement, for example by enhance the signal generated (or the ability of the sensor to measure the signal), speed up the measurement process and/or obtaining more information about the binding relationship between analyte and the capture species, which in turn can increase the accuracy and sensitivity of the sensor assembly.

In particular, modification of the environmental property can be used to modify the sensing conditions (e.g. improve sensitivity and/or increase response) and/or binding relationship between the capture species and the target analyte, in turn modifying the response of the sensor assembly to any analyte. As set out herein, the capture species and analyte selectively bind to one another and will have a binding affinity for one another defining the binding relationship. Modification of the environmental properties can be used to interrogate the binding relationship. For example, binding of the capture species to the analyte can be dependent on environmental properties, such as temperature, pH, etc. and the modification unit is configured to adjust properties such as these to alter the binding relationship. This can be used to speed up or slow down binding (e.g. binding rate ($K_{on}$)), which can provide more information about the binding relationship and help further discriminate between species. Similarly, modification of the properties of the sample more generally can result in improvements in sensor performance. For example, modification of the ionic conditions (e.g. ionic strength) can improve sensing conditions, for example by disrupting an electric double layer which can form on the sensing surface in ionic solutions and screen the capture species/analyte. Disruption of this double layer increases the Debye length, which allows further interrogation of the sample at a depth further into the sample and thus sensor performance.

Providing the modification unit with at least one electrode on or adjacent the sensing surface enables the modification of at least a portion of the sample in proximity to the sensing surface. Specifically, the environmental property/properties can be modified in situ and in the part of the sample (localised region) where the measurement is occurring. This can speed up measurement time, for example by avoiding separate pre-treatment and modifying the bulk sample, and enables the internal modification of particular properties without needing additional reagents (e.g. by creating property gradients within the sample). Moreover, this enables the real-time monitoring of any impact resulting from the modification, thereby providing additional information regarding the nature of the sample and the target analyte. For example, response to the change of environmental property, for example rates of change in measurement signal, can be monitored.

The use of modification electrodes also facilitates manufacture. Such a structure can be integrated into sensor assemblies using traditional manufacturing techniques, such as semiconductor manufacturing techniques, and while requiring only a straightforward electrical input to actuate the modification electrodes.

## Property

The set of modification electrodes is configured to modify a property (also referred to herein as "environmental property" or "sample solution property") of at least a portion of a sample received on the sensing surface in a region adjacent (i.e. next to or on) the sensing surface. By modification of property in this context, it is meant that the modification unit uses electrical energy to modify a physical (e.g. material) or chemical property of the sample, such as by applying electrical energy or an electric field directly to the sample to change the property or by converting electrical energy into another form of energy (e.g. thermal energy). The property can include physical properties, such as thermal properties (e.g. temperature) and/or viscosity, and/or chemical properties selected from at least one of the pH, electrical conductivity, thermal conductivity and/or ionic strength of the sample or a portion thereof, for example to create localised regions having a different property. Accordingly, in one embodiment, the set of modification electrodes is configured to modify a property (e.g. a physical or chemical property) selected from at least one of the pH, a thermal property (e.g. temperature and/or thermal conductivity), viscosity, electrical conductivity and/or ionic strength of the sample. The property may be modified directly, e.g. by direct application of heat to change the temperature, or indirectly for example by causing a chemical change which in turn changes the property, such as hydrolysis or electrolysis due to application of electrical energy which can change the pH. For example, the modification unit can be configured to create an electrical field which can cause a localised change in a part of the sample.

In one embodiment, the modification unit is configured to actuate the set of electrodes to modify a property of at least a portion of a sample received on the sensing surface in a region adjacent the sensing surface so as to modify a binding relationship between the capture species and the analyte. By binding relationship, it is meant that a property of or the nature of the binding relationship between the capture species and the target analyte. That is, the change in environmental property will modify one parameter of the binding between the capture species and the target analyte. In some embodiments, this can be the ability of the two to bind. For example, the change in property may prevent binding, or reduce binding rate to the extent that binding is too slow to be measured at an appreciable level (e.g. above the limit of detection (LOD) within a measurement time frame). This can be used to gain more information about the nature of the binding and help to increase the accuracy and confidence of the measurement. Alternatively, the sample may initially not have an environmental property which is optimal for measurement (e.g. a pH which is outside the optimal range for binding), and the modification unit may adjust this to bring it into an optimal range in the vicinity of the sensing surface. Binding relationship properties may include rate of binding between a capture species and a target analyte (e.g. a species such as a polymer, molecule or ion), the rate of dissociation (debinding) of the capture species and the target analyte, and/or the strength of the adherence between the capture species and target analyte.

For example, a temperature increase can decrease incubation time by increasing the rate of binding ($K_{on}$). In the case of some biomolecules, such as antibodies and a corresponding antigen, without wishing to be bound by theory, the rate of binding at or close to 37 °C is higher than that at room temperature (e.g. 21 °C), even if limited to the region adjacent the sensing surface only (i.e. without increasing the bulk temperature). Ionic strength and pH (which are linked) also modify the binding parameters. For example, certain molecules are only charged within small pH ranges and may not bind to the corresponding moiety if not charged. Modification of the pH can change the propensity of the capture species and target analyte to bind, which can provide additional information on binding and kinetics of binding. In some cases, this can lead to dissociation. Changes in pH and/or ionic strength can also be used where the sample comprises other non-analyte species, by modifying the solution to a point where e.g. non-selective binding is reduced or eliminated. Moreover, pH is a critical factor in many aspects of biological processes and, indeed, is heavily susceptible to variation in biological samples, for example due to biological processes (e.g. $CO_2$ or lactate production by cells). The ability to control this in situ and without requiring buffers or acids/bases provides a significant improvement.

In one embodiment, the binding relationship modified by the modification unit is selected from at least one of the rate of binding between the capture species and the analyte ($K_{on}$), the rate of debinding between the capture species and the analyte ($K_{off}$), and/or the binding affinity ($K_D$). Binding affinity defines the nature of the interaction between two entities which non-covalently bind together, in this case the respective capture species and target analyte, and can be represented as the binding constant ($K_a$) or the inverse of the binding constant, the dissociation constant ($K_D$). These changes can be used to provide different measurements and obtain additional information about the nature of the species in a sample. Moreover, modification can also be used to change the speed of the measurement process. For example, affinity (as defined by $K_A$ or $K_D$, as set out below) of the target analyte to the capture species can contribute to the sensitivity of the sensing site and thus dynamic range and LOD/Limit of quantification (LOQ). Typically, a higher $K_D$ between the capture species and analyte will provide a faster response.

Binding affinity can be defined by the binding constant $K_A$ or the inverse of $K_A$, the dissociation constant $K_D$. $K_A$ and $K_D$ are equilibrium constants relating to the rate of binding of the target analyte to the capture species (rate constant $k_{on}$) and the subsequent rate of dissociation of the target analyte from the capture species (rate constant $k_{off}$). In particular:

$$K_A = \frac{k_{on}}{k_{off}} \qquad K_D = \frac{k_{off}}{k_{on}} = \frac{1}{K_A}$$

$K_D$ is in molar concentration (M or mole/L), Ka is $M^{-1}$ (or L/mole), $k_{off}$ and $k_{on}$ are moles/second.

Affinity is an important parameter, since it characterises the relationship between the respective capture species and the target analyte. It has a significant influence on speed of the measurement as well as sensitivity and dynamic range. Moreover, by providing a sensor assembly which can adjust the system to provide different binding parameters for the same target analyte, this will in turn provide a different response to the same target analyte. For example, a higher $K_A$ (or lower $K_D$) will provide a higher sensitivity and lower detection limits.

One of the major rate determining steps in measurement using a target analyte and a capture species is the reaction speed. The speed (rate) will depend on a number of factors, including the number (or density) of capture species, the number of already bound capture species, the size of the sensing area, and importantly, the rate of binding and dissociation (i.e. characterized by $K_A$ or $K_D$). In equilibrium, this can be written as:

$$N = b_m A \frac{f}{1+f}, \ f = \frac{c}{K_D}$$

where N is number of bound capture species, $b_m$ is surface density of capture species (number/cm$^2$), A is sensing area (cm$^2$) and c is concentration (M).

The time constant $\tau$ for the sensor is determined by:

$$\tau = \frac{1}{k_{off} + c \, k_{on}}$$

At low concentrations, for example, this is in essence simplified to $1/k_{off}$. A fast response at these concentrations would therefore require a large $k_{off}$, which competes with small $K_D$ or a high $K_A$. As such, there is typically a trade-off when selecting a suitable a capture species which had as a high affinity but without sacrificing measurement speed. In embodiments, this can be adjusted in situ by the modification unit to avoid having to make these compromises (e.g. by measuring at plural different affinities) or by adjusting to an optimal site. The affinity (defined by affinity constant $K_A$ or the dissociation constant $K_D$) can be measured by any known method, provided that the method used for each capture species is the same or comparable to determine the relative affinities of the capture species. In embodiments, binding affinity ($K_A$ and/or $K_D$), $k_{on}$ and/or $k_{off}$ can each be measured by one of surface plasma resonance (SPR), biolayer interferometry (BLI) and ELISA. In embodiments, binding affinity ($K_A$ and/or $K_D$), $k_{on}$ and/or $k_{off}$ can each be measured as set out in "How to measure and evaluate binding affinities" Jarmoskaitelshraq et AI. 2020 eLife 9:e57264 https://doi.org/1 0.7554/eLife.57264, which is incorporated herein by reference. In particular, in some embodiments, the binding affinity ($K_A$ and/or $K_D$), $k_{on}$ and/or $k_{off}$ can be measured in accordance with the "kinetic approach" method set out in Appendix 1 of "How to measure and evaluate binding affinities". In some embodiments, this can include measurements at 25 °C and/or 0°C. In some embodiments, $k_{on}$ is measured as set out in this method "$k_{on}$ chase" in Appendix 1. In some embodiments, these values (binding affinity ($K_A$ and/or $K_D$), $k_{on}$ and/or $k_{off}$) are measured across concentrations of 0.05nM to 0.30nM in 0.05nM increments. In other embodiments, binding affinity ($K_A$ and/or $K_D$), $k_{on}$ and/or $k_{off}$ can each be measured using Biolayer Interferometry (BLI), for example using ForteBio Octet RED384 instrument and, in some embodiments, the method set out in "Off-rate screening for selection of high-affinity anti-drug antibodies" Ylera et. Al Analytical Biochemistry, Vol 441, Issue 2, 2013, Pages 208-213, ISSN 0003-2697, which is incorporated herein by reference. In some embodiments, the capture species has an affinity defined by $K_D$ of from $1 \times 10^{-4}$ to $1 \times 10^{-15}$ M (i.e. micromolar ($\mu$M) to femtomolar (fM). This may be from $1 \times 10^{-7}$ to $1 \times 10^{-15}$ M or from $1 \times 10^{-4}$ to $1 \times 10^{-12}$ M (i.e. micromolar ($\mu$M) to picomolar (pM)).

Ionic strength, in some embodiments, can also be used to modify the Debye length of the sensor element or the sensor assembly as a whole. That is, modifying the ionic strength of the sample within the region of the sensing surface can disrupt the double layer and therefore reduce the screening provided by the double layer (the Debye length is inversely proportion of the ionic strength). Ionic strength can be defined by

$$0.5 \times \sum c_i z_i^2$$

where $c_i$ is the molar concentration of each ion (i) and $z_i$ the charge of each ion (i). In some embodiments, this can be locally increased in the region around the measurement electrodes. This can be ionic strength of ions other than the analyte species (i.e. excluding the contribution from the analyte, where it is a charged species).

The environmental property is modified in at least a portion of the sample adjacent to (i.e. next to or abutting/on) the sensing surface. This may be a part of the sample (only), in some embodiments, such that it is a portion of the sample localised around or on the sensing surface. This is more efficient and responsive than modifying the bulk of the sample. For example, this can enable modulation of the signal and monitoring changes in real time, and quickly. Moreover, as discussed above, this enables additional advantages.

In additional or alternative embodiments, the modification of the property may lead to modifications other than the binding relationship. For example, in some embodiments, this may be used to remove non-specifically bound and/or non-analyte components from the surface, change the rate of sensing or a reaction occurring on the surface (e.g. by modifying the pH or temperature to control activity of a pH or temperature-sensitive, respectively, component such as an enzyme), to modify the analyte or a corrupted derivative or analog of the analyte (e.g. to identify mismatches in ds-DNA using temperature), to activate a process which will then be sensed (e.g. rupturing a membrane such a cell or passive membrane seal) and/or to modify sensor performance (e.g. reducing ions and increasing Debye length in measurement region to increase sensitivity). For example, for double stranded (ds) nucleotides (e.g. ds-DNA), the two strands will separate at a particular temperature, which particular temperature is dependent on the base pairs. A mutation will lead to a lower melting temperature and hence local change in temperature can lead to separation of the nucleotide chains reducing the response. This may, in some embodiments, modify the binding relationship. In another example, enzyme activities are pH dependent, so a reaction involving enzymes can be started or stopped by locally changing the pH. This also enables enzymes to be used as signal generating labels (e.g. horse radish peroxidase labelled antibody) or be central to the analyte being measured (e.g. lactate oxidase reaction with lactate).

In embodiments, the sample (e.g. a liquid) is modified in a localised region within an area or boundary having a maximum distance from the sensing surface (in any direction, for example including height in a direction perpendicular to the sensing surface or distance away from in the plane of the surface) related to the length of the capture species, since it is on this scale that any modification will have an effect on the sensor response and/or binding relationship and while benefiting from only having to modify the local region. In some embodiments, the distance may be up to 20 x the length of the capture species, such as up to 10 x, such as from $0.1 \times$ to $20 \times$ the length of the capture species, for example, $0.1 \times$ to $10 \times$ the length. In one embodiment, the modification unit is configured to modify a sample received on the sensing surface in a localised region adjacent the sensing surface, the localised region having a maximum distance from the sensing surface of $10 \times$ length of the capture species. The length of the capture species is defined by the longest length of the capture species as measured from the sensing surface. In some embodiments, the distance may be up to (i.e. less than or equal to) 100nm, such from 1 nm to 100 nm. A typical Debye length in physiological conditions is 1 nm and so modification at this distance can impact the Debye length and screening by the double layer. In some embodiments, the distance may be from 1nm to 10nm or 10 nm to 100 nm. The distance may be a single distance, e.g. height or width, both height and width, or all distances from the sensing surface such that the modification must occur at least one point within this localised region. In this context, the sensing surface is defined as being the part of the sensing element (or sensing layer, where present) which comprises the capture species.

Modification Unit

The modification unit (or modification device) comprises a set of modification electrodes with at least a first modification electrode provided adjacent (i.e. next to or abutting) or on (e.g. embedded within) the sensing element. The set of modification electrodes is configured to modify a property of at least a portion of a sample received on the sensing surface in a region adjacent the sensing surface, for example, so as to modify the sensor response (e.g. measurement signal) and/or binding relationship between the capture species and the analyte. In other words, the change in environmental property may be directly responsible for changing the binding relationship between the capture species and analyte. This differs from a physical force causing the capture species and analyte to dissociate, and instead relates to a change in the binding affinity, for example, and the equilibrium in the sample solution around the sensing surface. The modification unit may be configured to actuate the set of modification electrodes by applying an electrical input to the electrodes, for example by generating a voltage across the modification electrodes.

At least one modification electrode is provided adjacent or on the sensing element. This is so as to ensure that the part of the sample on or adjacent the sensing surface is influenced during the modification process, which can induce a local change (only). This may be, in embodiments, so as to be co-planar with the sensing element. In one embodiment, the sensor assembly further comprises a substrate on which the sensing element is provided; and the first modification electrode of the set of modification electrodes is provided on or in the substrate (which in some embodiments may be the sensing layer, where present). For example, this may be adjacent or on, including co-planar, with the measurement electrode. This enables the localised modification of the sample. In one embodiment, the set of at least two modification electrodes are provided adjacent to or on the sensing element. For example, both modification electrodes can be co-planar with the sensing element. This ensures that sample in the region adjacent the sensing surface is modified. In some embodiments, the sensing element (including the modification electrode(s)) is provided on the substrate and may be co-planar with the modification electrode(s).

In one embodiment, the set of at least two modification electrodes of the modification unit are interdigitated. That is, the two modification electrodes are arranged in an interdigitated configuration. By interdigitated configuration, it is meant that the first electrode and second electrode (in this context, first and second modification electrodes) are interdigitated with at least one of the modification electrodes surrounding at least a part of the other. In some embodiments the first electrode may comprise or be defined by plural extension portions (e.g. fingers) which are interlaced or interlocked with at least one, but optionally plural, extension portions (e.g. fingers) of the second (modification) electrode. For example, the first (modification) electrode may comprise at least first and second extension portions which are spaced apart from one another to form a recess therebetween and the second (modification) electrode comprises at least one first extension portion which is received in the recess. In embodiments, example IDE configurations may include interdigitated comb, spiral or serpentine configurations. In some embodiments, the first and second electrodes in the interdigitated configuration are spaced apart from one another by a spacing of from 10 nm to 10 $\mu$m, such as from 100 nm to 10 $\mu$m, from 500 nm to 10 $\mu$m, or from 100 nm to 5 $\mu$m. This may be that the extension portions are spaced apart by (e.g. the recess has a width of) 10 nm to 10 $\mu$m (such as from 100 nm to 10 $\mu$m, from 500 nm to 10 $\mu$m, or from 100 nm to 5 $\mu$m), with the sensing element provided therebetween. In embodiments, the modification electrodes (e.g. in IDE form) are at least partially embedded within the sensing element. For example, the sensing element may comprise a layer or substrate surrounding at least a portion of the modification electrodes (or extension portions of the IDE).

The set of modification electrodes are arranged with at least the first measurement electrode adjacent or on the sensing element (e.g. the sensing surface). This can be within 10 $\mu$m of the sensing element (and optionally sensing surface), such as less than or equal to 10 $\mu$m, less than or equal to 5 $\mu$m, less than or equal to 1 $\mu$m, less than or equal to 0.5 $\mu$m or directly on the sensing element, and optionally the sensing surface.

In embodiments, the modification electrodes may be formed from or comprise metals, metal oxides, metal nitrides, carbon-based materials, a conductive polymer, doped silicon or polysilicon or combinations thereof. In an embodiment, the modification electrodes may be formed from or comprise gold, silver, copper, platinum, nickel, titanium, titanium nitride, ruthenium, ruthenium oxide or combinations thereof.

In one embodiment, the two modification electrodes are arranged in an interdigitated configuration and at least a part of the sensing element, such as the sensing surface, is arranged at least in part between the first modification electrode and second modification electrode (in the interdigitated portions).

The use of a modification unit utilising electrodes allows for modification of a number of properties, including pH, electrical conductivity, thermal properties (e.g. temperature and/or thermal conductivity) and/or ionic strength of the sample with a straightforward and easy to manufacture set-up. Moreover, the devices can be miniaturised, enabling use in point-of-care settings.

With respect to pH, this can be achieved for example by a redox reaction being performed at the modification electrode surface to thereby modify proton ($H^+$) concentration, at least locally in the region of the modification electrode. For example, in some embodiments the modification unit may be configured to perform an electrolysis reaction (or in some cases, hydrolysis). Water can be decomposed into oxygen and hydrogen by electrolysis, and this can generate protons and $OH^-$ ions, modifying the concentration of protons in the solution around one of the electrodes and thus the pH. Accordingly, in one embodiment, the modification unit is configured to actuate the set of at least two electrodes so as to electrolyse water within the sample and thereby modify the pH of the sample. The change in pH can also occur in other reactions, for example driven by electrolysis. For example, processes such as $CO_2$ reduction which can also produce or use up $H^+$ or $OH^-$ in solution and $N_2$ reduction (to ammonia) consumes protons, thus increasing the pH. These reactions generate a pH change at least in a local region around the modification electrode(s) provided adjacent or one the sensing surface, and thus the sensing surface. In some embodiments, the application of a DC voltage between two modification electrodes can result in a local change for other reasons (additionally or alternatively), for example due to the movement of ions (e.g. proton) to the modification electrodes. This can create a pH gradient between the modification electrodes, and these modification electrodes can be arranged so as to form a region of a particular pH. This can be used to create a positive or negative change in pH. Exemplary voltages include at least 1 V, at least 1.23V, at least 1.5 V, at least 2 V. This can be a negative voltage, such as at least -1V, such as at least -1.23V, at least -1.5V or at least -2V. In some embodiments, this can be up to 24V, such as up to 10 V (e.g. 1V to 24V or -1V to - 24V).

Alternatively or additionally, the change in pH can be achieved using an electric field generated by the modification electrodes. The modification unit can be configured to generate an electric field which modifies the pH in a localised region around and on the sensing surface by attracting or repelling charged entities (e.g. protons). This can also be used to modify the ionic strength of a part of the sample.

With respect to temperature, the modification electrodes can be used to generate a temperature increase in the fluid sample using a heating element (e.g. by having a resistive heating element electrically located between the modification electrodes and by passing a current through the heating element).

The modification unit may further comprise a property sensor configured to measure the property (i.e. physical or chemical property) or properties which is/are modified by the modification unit. This can be used to obtain an initial reading of the property to guide the modification (e.g. may be used to determine a parameter of the modification, such as duration or intensity), may be used during to the modification to track progress and/or may be used after modification. This may be provided on or adjacent the sensing surface, or may be upstream, for example, in a system where the sample is flowed onto the sensing surface. For example, in embodiments where the modification unit is configured to modify the pH, the property sensor may be a pH sensor. For example, standard pH sensors may be used and/or local pH monitoring techniques and sensors (i.e. for the localised region adjacent or on the sensing surface), such as those discussed and disclosed in "Measuring local pH in electrochemistry" (Monteiro and Koper Current Opinion in Electrochemistry Volume 25, February 2021, 100649). Similarly, where the property modified is temperature, the property sensor may be a temperature sensor. Other types of sensors which may be employed include thermal conductivity, ionic strength sensors and/or electrical conductivity. Plural of any type of property sensors may also be used, in embodiments, where the properties in question are modified by the modification unit.

Capture Species

The analyte may, for example, be selected from a molecular species, a metal ion, a virus, and a microorganism. Biomolecule analytes are particularly useful and may, for instance, be a hormone selected from an eicosanoid, a steroid, an amino acid, amine, peptide or protein, a nucleic acid, single or double stranded DNA, peptide nucleic acid.

Any suitable analyte capture species can be selected, according to the analyte which is intended to be sensed by the sensor assembly. For example, the capture species may comprise an antibody with specificity for a particular antigen. In such an example, the analyte may take the form of the antigen. More generally, the capture species may, in some embodiments, comprise at least one selected from a protein, a peptide, a carbohydrate, a nucleic acid, and an aptamer. The protein may, for example, be an enzyme, such as an enzyme having specificity for the analyte. In other non-limiting examples, the protein is an antibody. In the latter case, the analyte may be an antigen which is specifically bound by the antibody. The capture species may, for instance, comprise or be defined by an antigen. In this case, the analyte may be a species, such as an antibody, which is specifically bound by the antigenic capture species. The antigen may be or comprise, for example, a protein, a peptide, a carbohydrate, such as a polysaccharide or glycan. In an embodiment, the analyte capture species comprises an aptamer. An aptamer may be defined as an oligonucleotide or peptide configured to bind the analyte. Such an aptamer may, for example, be configured to interact with, for example bind, various analyte types, such as small molecules, for example amino acids or amines, proteins, metal ions, and microorganisms.

In one embodiment, the capture species comprises at least one aptamer selected from an oligonucleotide, a polynucleotide, a peptide, or a combination thereof. Such aptamers, as well as other biological species such as antibodies, are well suited to the sensor assemblies and methods disclosed herein as the species are susceptible to pH and temperature influence, even relatively minor changes, such that biological samples can readily be manipulated by the modification unit. In some embodiments, the capture species comprises a DNA linker, the linker comprising a chain length of at least 24 nucleotides (nt), such as at least 25 nt, such as at least 30 nt. In some embodiments, the capture species comprises a double stranded DNA linker, the linker comprising a chain length of at least 24 base pairs, such as at least 25 base pairs, such as at least 30 base pairs.

The capture species (for example, a plurality of individual capture species) is located adjacent to (i.e. next to or abutting) or on the sensing surface. The interaction between the analyte and the capture species will alter the measurement signal obtained. In some embodiments, the capture species is provided on (e.g. adhered to or bound to) the sensing surface (e.g. the surface of an electrode or sensing layer). In some embodiments, the sensing surface is functionalized with the capture species. Such functionalization can be achieved in any suitable manner, such as by covalently or non-covalently immobilizing the capture species to the surface.

In some embodiments, a detection species may be provided to the sample, wherein the detection species is configured to specifically-bind to the analyte (e.g. a part other than that to which the capture species can bind). The detection species may be provided when the analyte is specifically bound to the capture species or before this occurs. The detection species may be an amplification species for amplifying the measurement signal or response, or may be a different species, for example provided with the purpose of increasing the selectivity of the measurement. This can in embodiments be as part of a sandwich assay.

More generally, the sensing element is arranged to receive a sample matrix. Sample matrix refers to the sample as a whole, including the analyte if present. Thus, it may comprise a carrier (such as a liquid) and the analyte. The sample matrix may be, for example, blood, urine, sweat, tears, etc., and may (potentially) contain the analyte. In an embodiment, the sample matrix is a liquid.

Sensing Element

The sensing element (or "sensing device") comprises a sensing surface, a capture species configured to specifically bind with an analyte provided on the sensing surface, and at least one measurement electrode configured to provide a measurement signal indicative of a property of an analyte in a sample provided on the sensing surface. That is, the measurement electrode is addressable to provide the measurement signal.

At least a part of the sensing element therefore defines the sensing surface. This could be defined by the measurement electrode (e.g. a surface thereof) or may be defined by a separate sensing layer (for example, in some embodiments, the sensing element comprises a sensing layer defining the sensing surface and the electrode may be addressable to provide the measurement signal indicative of the interaction of the sensing layer and electrode), or a combination thereof. For example, the sensing layer may be provided between two electrodes (e.g. a chemiresistor). Where there are plural electrodes, each may be individually addressable.

Where present, the sensing layer may comprise or be a dielectric layer. In embodiments, the dielectric layer may comprise or be a polymer layer, a glass layer, a glass-ceramic layer, a ceramic layer, a metal oxide layer, a metal nitride layer, a silicon-based layer or combinations thereof. In certain embodiments, the dielectric layer comprises or is a polyimide, silicon dioxide, or silicon nitride layer. In some embodiments, the sensing layer is a nanoporous membrane, with the nanopores forming the through holes (structures) on the nano-scale (e.g. 1 to 1000nm, or 1 to 100 nm). In one further embodiment, the measurement electrode(s) may be embedded within the sensing layer.

In embodiments, the measurement electrode(s) may be formed from or comprise metals, metal oxides, metal nitrides, carbon-based materials, a conductive polymer, doped silicon or polysilicon or combinations thereof. In an embodiment, the measurement electrodes may be formed from or comprise gold, silver, copper, platinum, nickel, titanium, titanium nitride, ruthenium, ruthenium oxide or combinations thereof.

In some embodiments, the sensing element comprises at least two measurement electrodes and the measurement electrodes are arranged in an interdigitated configuration. Where the sensing element comprises a sensing layer, at least a part of the sensing layer can be provided between the interdigitated portions of electrodes of the IDE. This enables the miniaturisation of the system by eliminating the need for a reference electrode, without sacrificing or reducing the accuracy of the system, enabling use in point-of-care situations. For measurement electrodes, the spacing of the electrodes of the IDE can impact sensitivity. In an embodiment, the first and second measurement electrodes in the interdigitated configuration are spaced apart from one another by a spacing of from 10 nm to 10 $\mu$m, such as from 100 nm to 10 $\mu$m, from 500 nm to 10 $\mu$m, or from 100 nm to 5 $\mu$m. This may be that the extension portions are spaced apart by (e.g. the recess has a width of) 10 nm to 10 $\mu$m (such as from 100 nm to 10 $\mu$m, from 500 nm to 10 $\mu$m, or from 100 nm to 5 $\mu$m), with the sensing layer provided therebetween. This spacing is thought to provide an optimal sensitivity, at least because the change in content of the through holes will have a significant impact on measurement signal at this scale.

In one embodiment, the sensing element comprises a sensing layer, the sensing layer having a plurality of structures formed therein; and wherein the measurement signal is dependent on the location of analyte relative to the plurality of structures in the sensing layer. Such an arrangement has been found to provide a particularly useful tool for determining a property of an analyte, since the relative position of the analyte within or around the structures can have a significant effect on the properties. In a further embodiment, the measurement signal is indicative of an impedimetric property (e.g. dielectric property (e.g. permittivity), resistance, capacitance, impedance, conductance, or a combination thereof) of the sensing layer; and wherein the plurality of structures are arranged on or in the sensing layer such that an analyte received between or within the structures modifies the impedimetric property, and therefore the measurement signal. That is, it measures an impedimetric property, which in one embodiment is based on the permittivity of the sensing layer.

In some embodiments, the plurality of structures comprise or define a plurality of recesses (e.g. wells) or through holes (e.g. via) in the sensing layer. In embodiments, the recesses or through holes have a largest diameter (at their widest point) less than or equal to 2 $\mu$m, for example from 50 nm to 1 $\mu$m. In some embodiments, the recesses or through holes have a diameter (at their widest point) of less than or equal to 1000 nm, for example less than or equal to 800 nm, less than or equal to 500 nm. This may be from 1 nm to 2000 nm, 1 nm to 1000nm, 1 nm to 800 nm, 1 nm to 500 nm, such as 10 nm to 1000 nm, 10 nm to 800, 10 nm to 500 nm, 50 nm to 2000 nm, 50 nm to 1000 nm, 50 nm to 800, 50 nm to 500 nm, 100 nm to 1000 nm, 100 nm to 800, or 100 nm to 500 nm. In one embodiment, the recesses or through holes have a narrowest diameter of at least 0.5 nm, for example at least 1 nm, or at least 10 nm. Recess or through hole radius will impact the response to an analyte: a larger recess or through hole will have a response which is more dependent on the materials within it. A smaller recess or through hole may be selective to particular analytes. In embodiments where the sensing layer comprises through hole(s), the sensing element may be arranged in the fluid chamber such that sample can reside above the upper surface, reside below the lower surface sensing layer and pass through the through holes in the sensing layer. In some embodiments, the depth of the recesses or through holes may be less than or equal to 2 $\mu$m, for example less than or equal to 1000 nm, for example less than or equal to 800 nm, less than or equal to 500 nm. In one embodiment, this is a depth of from 100 nm to 2 $\mu$m. This may be 1 nm to 1000 nm, 1 nm to 800 nm, 1 nm to 500 nm, such as 10 nm to 1000 nm, 10 nm to 800, 10 nm to 500 nm, 50 nm to 1000 nm, 50 nm to 800, 50 nm to 500 nm, 100 nm to 1000 nm, 100 nm to 800, or 100 nm to 500 nm. Exemplary combinations include a diameter of 1 nm to 1000 nm and a depth of 1 nm to 1000 nm, such as 10 nm to 500 nm and 10 nm to 500 nm depth. In one embodiment, the depth of the recesses or through holes is from 0.15 $\mu$m to 1 $\mu$m. Across these depths, noticeable changes in electric field strength and responses have been found, without causing significant variation of electric field across each individual sensing site. The depth can be measured from the upper surface of the sensing layer to the lower surface of the sensing layer in the case of a through hole.

System

The system may be configured to perform any of the method steps disclosed herein. Moreover, any of the embodiments set out herein with respect to the method apply equally to the system, and any of the embodiments set out herein with respect to the system apply equally to the method. In one aspect, a system for determining a property of an analyte in a sample, the system comprises a sensor assembly according to any of the embodiments disclosed herein; and a control unit configured to determine the property of the analyte based on the measurement signal from the sensing element.

In one embodiment, the control unit is further configured to operate the modification unit to actuate the modification electrodes to modify a property of at least a portion of a sample received on the sensing surface in a region adjacent the sensing surface and subsequently determine the property of the analyte based on the measurement signal from the sensing element.

In one embodiment, the system may further comprise a signal processing unit configured to process measurement signals received from the sensor assembly; and a property determination unit which may receive processed signals and determine the property based on the processed signals. The property determination unit may, in certain embodiments, be configured to determine the property based on the absolute change in measurement signal and/or the rate of change of the signals.

The control unit, property determination unit and/or signal processing unit may each (individually or combined) be a processor or controller. The control unit may incorporate the property determination unit and/or the signal processing unit or may be in addition to these. The control unit, signal processing unit, and the property determination unit may be implemented in any suitable manner, with software and/or hardware, to perform the various functions required. One or all of the units may, for example, employ one or more microprocessors programmed using software (for example, microcode) to perform the required functions. Examples of processor components that may be employed in various embodiments include, but are not limited to, conventional microprocessors, application specific integrated circuits (ASICs), and field-programmable gate arrays (FPGAs). In various implementations, the control unit, the signal processing unit, and/or property determination unit may be associated with one or more non-transitory storage media such as volatile and non-volatile computer memory such as RAM, PROM, EPROM, and EEPROM. The non-transitory storage media may be encoded with one or more programs that, when executed on one or more processors and/or controllers, perform the required functions. Various storage media may be fixed within a processor or controller or may be transportable, such that the one or more programs stored thereon can be loaded into the signal processing unit, property determination unit and/or control unit.

In one aspect, a computer program comprising computer program code which is configured, when said computer program is run on one or more physical computing devices, to cause said one or more physical computing devices to implement the methods disclosed herein.

In one aspect, one or more non-transitory computer readable media having a computer program stored thereon, the computer program comprising computer program code which is configured, when said computer program is run on one or more physical computing devices, to cause said one or more physical computing devices to implement the method disclosed herein.

Determination of the property

The methods, systems and sensor assemblies disclosed herein can be used to determine or measure a property ("analyte property") of an analyte in a sample, such as an analyte characteristic. In certain embodiments, this can be selected from a determination of the presence of the analyte, the concentration of the analyte in the sample, the diffusion constant of the analyte (e.g. rate of diffusion measured in $m^2/s$) in the sample matrix, or a combination thereof. The terms "analyte concentration" or "concentration of the analyte" as used herein may, in certain embodiments, refer to the activity of the analyte. The activity of the analyte may provide a measure of the effective concentration of the analyte in a sample matrix.

The analyte may, for example, be selected from a molecular species, a metal ion, a virus, and a microorganism. Biomolecule analytes are particularly useful and may, for instance, be a hormone selected from an eicosanoid, a steroid, an amino acid, amine, peptide or protein.

In some embodiments, the control unit or property determination unit may be configured to determine the property of the analyte based on plural measurement signals before, during and/or after the modification unit has modified the property. In some embodiments, the modification unit may be configured or operated to modify a property a plurality of times, and measurement signals may be obtained at least one time point after each modification. Each of these can improve the accuracy of the determination. For example, the response before, during and/or after the modification can be combined to provide a more accurate determination. At least two of these together and/or tracking the measurement through the modification can be used to observe a fingerprint or response which is unique to the presence and amount of the target analyte. This may be based on the binding profile and/or a kinetic analysis of the measurement signal. This can be used to compensate for noise and increase accuracy. For example, this may be used to modify the binding affinity of the capture species and target analyte. The response under different conditions can be used as a fingerprint or unique signature. For example, this can be compared to expected responses, for example for different concentrations of the analyte and/or pertaining to modified analyte species (e.g. where there are minor mutations or mismatches, such as for mismatched DNA).

The measurement signal, or data derived therefrom, from measurements over time (during which the property is modified) may be combined. Accordingly, in one embodiment, the control unit or property determination unit may be configured to use measurement signals from at least two time points, selected from before, during and/or after a modification.

In one embodiment, the control unit may be configured to operate the modification unit as to switch between a configuration in which binding between the capture species and analyte is promoted (measurement configuration, for example where $K_{on}$ is relatively higher (than $K_{off}$) and/or $K_D$ is lower) and one in which dissociation is promoted (debinding configuration, for example where $K_{off}$ is relatively higher (than $K_{on}$) and/or $K_D$ is higher) and the property determination unit and/or control unit may be configured to determine the property based on the measurement signal during the measurement configuration. The switch may be from the measurement configuration to the debinding (dissociation) configuration, or the reverse. In some embodiments, the property determination unit and/or control unit may be configured to obtain the measurement signal during the switch between the measurement configuration and the debinding configuration, and the determination of the property may be based on a parameter relating to the change in measurement signal during the switch, such as rate of change and/or magnitude. In some embodiments, the determination of the property may be based on a parameter relating to the change in measurement signal during the switch, such as rate of change and/or magnitude between the measurement configuration and debinding configuration a plurality of times. The property determination unit and/or control unit may be configured to obtain the measurement signal during the alternating (cycling) and the determination of the property may be based on a parameter relating to the change in measurement signal during the switch, such as rate of change and/or magnitude.

As set out above, the modification unit may further comprise a property sensor configured to measure the property (i.e. environmental property) or properties of the sample (at least in a local region adjacent or on the sensing surface) which is/are modified by the modification unit. In embodiments, the control unit may be configured to obtain a first measurement of the property and subsequently operate the modification unit so as to modify the property of the sample based on the first measurement. For example, this may be under parameters based on the first measurement. In an embodiment, the control unit may be configured to operate the modification unit so as to modify the property of the sample until a target property value is obtained.

Method

As noted above, the method may comprise carrying out any of the steps carried out in respect of the sensor assembly and system disclosed herein. For example, the method may additionally comprise carrying out any of the steps the control unit, signal processing unit and/or property determination unit are configured to carry out.

In one aspect, a method for determining a property of an analyte in a sample comprises:

providing a sensor assembly for determining a property of an analyte in a sample, the sensor assembly comprising a sensing surface, a capture species configured to specifically bind with an analyte provided on the sensing surface, and at least one measurement electrode configured to provide a measurement signal indicative of a property of an analyte in a sample provided on the sensing surface;
providing a sample to the sensing surface;
modifying a property of at least a portion of the sample in a region adjacent the sensing surface; and
determining a property of analyte in the sample on the sensing surface.

In one embodiment of the method, the sensor assembly is a sensor assembly according to any of the embodiments disclosed herein.

In one embodiment, modifying a property of the sample in a region adjacent the sensing surface is carried out using a modification unit comprising a set of modification electrodes with at least a first modification electrode provided adjacent or on the sensing surface (or the sensing element) and wherein the set of modification electrodes is configured to modify the property of at least a portion of the sample.

In one embodiment, the property is selected from at least one of the pH, a thermal property, viscosity, electrical conductivity and/or ionic strength of the sample. In one embodiment, modifying a property of at least a portion of a sample received on the sensing surface in a region adjacent the sensing surface comprises modifying the binding relationship between the capture species and the analyte. In one embodiment, the binding relationship modified by the step of modifying a property of at least a portion of the sample in a region adjacent the sensing surface is selected from at least one of the rate of binding between the capture species and the analyte ($K_{on}$), the rate of debinding between the capture species and the analyte ($K_{off}$), and/or the binding affinity ($K_D$). In one embodiment, the capture species are an aptamer selected from an oligonucleotide, a polynucleotide, a peptide, or a combination thereof. In one embodiment, the step of modifying a property of at least a portion of the sample in a region adjacent the sensing surface comprises modifying the pH to a pH of between 6.5 and 8. In one embodiment, the region adjacent the sensing surface is a localised region adjacent the sensing surface, the localised region having a maximum distance from the sensing surface of 10 x length of the capture species. This may have any of the features relating to the localised region set out above.

In embodiments, the method may further comprise any of the steps set out in respect of the control unit and/or property determination unit, i.e. which these are configured to perform. For example, the method may comprise determining the property of the analyte based on plural measurement signals before, during and/or after the modification unit has modified the property. In some embodiments, the method may comprise modifying a property a plurality of times, and determining the property at least one time point after each modification. In additional or alternative embodiments, the method may comprise alternating and switch between configurations in which binding between the capture species and analyte is promoted and one in which dissociation is promoted by modifying the property.

In one embodiment, the method may further comprise determining the (environmental) property or properties of the sample (at least in a local region adjacent or on the sensing surface). This may comprise obtaining a first measurement of the (environmental) property and subsequently modifying the (environmental) property of the sample based on the first measurement.

Specific Embodiments

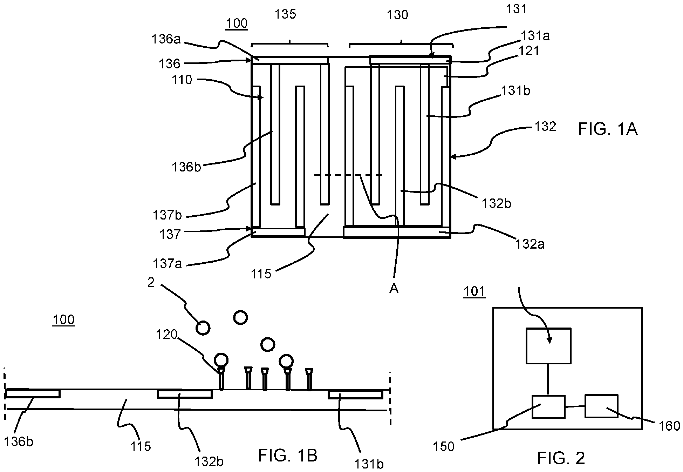

Figs. 1A and 1B schematically depict a sensor assembly 100 for determining a property of an analyte 2 in a sample. Fig. 1A provides a schematic plan view of the sensor assembly 100 and Fig 1B provides a schematic cross-sectional view of a part of the sensor assembly 100 along line A shown in Fig. 1A. It will be appreciated that the schematic drawings are provided to exemplify the concepts provided herein and the components, such as the capture species, are not intended to be to scale.

The sensor assembly 100 comprises a sensing element 110 which comprises a sensing layer 115 and two measurement electrodes 131, 132 arranged as a measurement interdigitated electrode (IDE) 130. The sensing layer 115 in this embodiment is a planar dielectric layer. The sensing layer 115 is functionalised on a part of the upper surface with capture species 120 configured to specifically bind with the analyte provided on the upper surface to form a sensing surface 121. The measurement IDE 130 surrounds the sensing surface 121 of the sensing layer 115 and interrogates the sensing layer 115 in this region to provide a measurement signal indicative of a property of the analyte 2 within the sensing surface 121 and, in particular, of the interaction of the analyte with the capture species 120. Specifically, binding of the analyte 2 with the capture species 120 causes an electronic change in the sensing layer 115 which can be detected by addressing the measurement IDE 130.

In this embodiment, the measurement IDE 130 is formed from a first measurement electrode 131 and a second measurement electrode 132 arranged in an interdigitated configuration, as visible from the plan view of Fig. 1A. Specifically, the first measurement electrode 131 comprises a first connector 131a which extends along one side of the sensing layer 115 and from which plural first extension portions 131b extend perpendicularly. These first extension portions 131b are spaced apart from one another. The second measurement electrode 132 comprises a second connector 132a which extends along the opposite side of the sensing layer 115 to the first connector 131a and plural second extension portions 132b extend perpendicularly from the second connector 132a towards the first connector 131a. The second extension portions 132b are also spaced apart from one another but are staggered as compared to the first extension portions 131b. In this way, the second extension portions 132b are received between the first extension portions 131b to form the measurement IDE 130. This can be referred to as an interdigitated comb configuration. This allows the measurement IDE 130 to detect changes in the sensing layer 115 caused by interaction of analyte 2 with the capture species 120. Moreover, the use of the measurement IDE 130 can enable the miniaturisation of the system by eliminating the need for a reference electrode, without sacrificing or reducing the accuracy of the system, enabling use in point-of-care situations.

The sensor assembly 100 further comprises a modification unit comprising a set of modification electrodes arranged as a modification IDE 135 with a first modification electrode 136 and a second modification electrode 137 both on the sensing layer 115 adjacent the sensing surface 121 and the capture species 120. The set of modification electrodes is configured to modify a property of sample received on the sensing surface 121 in a localised region adjacent the sensing surface, as will be set out in more detail below.

As set out above, the set of modification electrodes in this embodiment is arranged as a modification IDE 135. Specifically, the modification IDE 135 is formed from a first modification electrode 136 and a second modification electrode 137 arranged in an interdigitated configuration, as visible from the plan view of Fig. 1A. Specifically, the first modification electrode 136 comprises a first connector 136a which extends along one side of the sensing layer 115 and from which plural first extension portions 136b extend perpendicularly. These first extension portions 136b are spaced apart from one another. The second modification electrode 137 comprises a second connector 137a which extends along the opposite side of the sensing layer 115 to the first connector 136a and plural second extension portions 137b extend perpendicularly from the second connector 137a towards the first connector 135a. The second extension portions 137b are also spaced apart from one another but are staggered as compared to the first extension portions 136b. In this way, the second extension portions 137b are received between the first extension portions 136b to form the modification IDE 135. This can be referred to as an interdigitated comb configuration.

The modification IDE 135 is provided on the sensing layer 115, which acts as a substrate, next to the measurement IDE 130. In this particular embodiment, this can be within 10 micrometres of the measurement IDE 130, such as within 1000 nm. This allows the modification IDE 135 to cause a local change in a property of a sample received on the sensing surface 121 and thereby modify the interaction between the analyte 2 and the capture species and/or more generally the response measured by the measurement IDE 130.

In this embodiment, the modification IDE 135 can be actuated to modify a property by creating a potential difference across the first modification electrode 136 and second modification electrode 137. In this embodiment, the voltage is selected such that a pH change is caused in sample in the vicinity of the modification IDE 135 and accordingly also the sensing surface 121 and measurement IDE 130. Specifically, DC voltages can be used of at least 1.23 V, such as at least 1.5 V and may be up to 24 V such as up to 10 V. These voltages are readily achievable in using DC voltages on microchips. As set out above, such as modification IDE 135 can cause electrolysis of species in the sample, including in particular water molecules in aqueous solutions (such as a biological samples, including urine, blood and saliva). This results in a redox reaction being performed at the modification electrode surface to thereby modify proton ($H^+$) concentration. This can be used to either create a pH gradient around and between the electrodes, whereby there is, for example, an increase in protons in the region of one of the modification electrodes 136, 137 and a decrease relative to the other. Depending on the spacing and scale of the modification electrodes 136, 137, the region of increased protons or decreased protons can be next to the measurement IDE 130 such that the pH of this region is modified electrochemically (by the redox reaction) and also through movement (diffusion) of ions either away from the region where proton concentration is increased or towards the region of decreased proton concentration. In this way, through configuration of the modification IDE 135, local regions of the sample can be modified so as to change the pH. This modification of the pH will result in a change in the response of the sensor assembly 100 to an analyte 2. For example, this can modify the binding relationship between the analyte 2 and the capture species 120. It will be appreciated that the binding of analytes 2 to capture species 120 can be dependent on the charge of the species in question (both analyte 2 and capture species 120) and so modification of the pH can change the propensity to bind and the speed of binding.

In one general method of use of sensor assembly 100 and system 101, the property of an analyte 2 in a sample can be determined by providing a sample to the sensing surface 121, modifying the pH using the modification IDE 135; and determining a property of analyte 2 in the sample on the sensing surface 121.

In one specific method, the modification using the modification IDE 135 may be used so as to bring the sample from a pH (e.g. as is found in a typical environment from which it is sampled, such as less than 6.5 or greater than 8 for biological molecules) at which binding between the analyte 2 and capture species 120 is slow to a pH in which the analyte 2 and capture species 120 can bind or binds more quickly (e.g. from 6.5 to 8). This can reduce incubation time and reduce the need to modify samples in advance of measurement. This can be guided, for example, by a pH sensor.

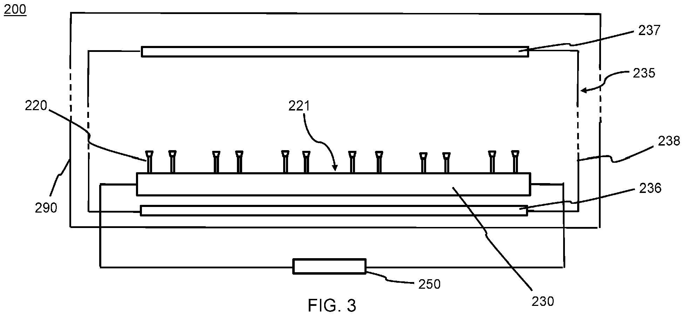

Fig. 3 shows a schematic cross-sectional view of another embodiment of a sensor assembly 200 which can modify the pH of sample in a localised region. In particular, the sensor assembly 200 comprises chamber 290 in which is housed a sensing element in the form of a measurement electrode 230 which is functionalised with capture species 220 on its upper surface so as to define a sensing surface 221. The capture species 220 are configured to specifically bind with an analyte provided on the sensing surface and the measurement electrode 230 is configured to provide a measurement signal indicative of a property of an analyte in a sample provided on the sensing surface 221. The measurement electrode 230 can be addressed by a signal processing unit 250, which is external to the chamber 290.

The sensor assembly 200 further comprises a modification unit 235 comprising a set of modification electrodes 236, 237 with the first modification electrode 236 provided adjacent the measurement electrode 230 and the second modification electrode 237 provided at the top of the chamber 290 connected to the first modification electrode 236 by wires 238 (dotted lines denoting a distance). As with the sensor assembly 100 of Figs. 1A and 1B, the sensor assembly 200 of Fig. 3 is configured to modify the pH of the sample in a region about the measurement electrode 230.

In this embodiment, direct current (DC) can be flowed between the first modification electrode 236 and second modification electrode 237 to cause a change in pH. This can result from due to the movement of ions (e.g. proton) to the modification electrodes and through electrolysis. As a result, a pH gradient can be created between the first modification electrode 236 and the second modification electrode 237 through the chamber 290. As the first modification electrode 236 is provided adjacent the measurement electrode 230 and the second modification electrode 237 is significantly further away, the measurement electrode 230 will be exposed the environment around the first modification electrode 236. This creates a local region of a desired pH (and ion concentration, if desired) in the sample and enables the modification of the property within that region.

The provision of a local region can lead to a near instantaneous change (as compared to a bulk change) and can be used to switch between configurations to get further information about an analyte. For example, it can be used to quickly switch between conditions favourable to binding and those not favourable to binding. It will be appreciated, however, that although the modification of a local region is described above, such a set up can be used to create more widespread property changes, depending on the sample and modification unit 235.

In an alternative or additional use of the sensor assembly 200 of Fig. 3, the modification unit 235 can be used to generate an electric field about the sensing surface 221 which can be used to manipulate species within the sample. For example, electrically charged species in the sample (e.g. charged biomolecules, DNA and ions) can be moved to the extent that they can modify pH of the sample within a particular region and/or modify the ionic strength of the sample within a particular region. This can modify the ability of the sensor assembly 200 to sense changes caused by the analyte, for example by increasing sensitivity by disrupting the electric double layer which forms on the sensing surface 221 in ionic fluids.

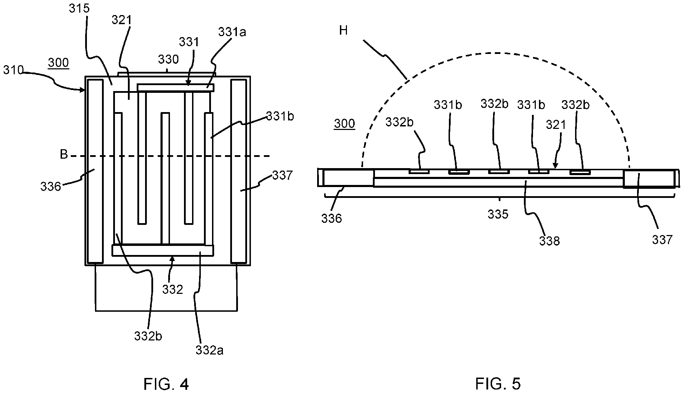

Fig. 4 shows a schematic plan view of another embodiment of a sensor assembly 300 which can be used to modify a property of a sample. Fig. 5 provides a schematic cross-sectional view of a part of the sensor assembly 300 along line B shown in Fig. 4.

The sensor assembly 300 comprises a sensing element 310 which comprises a sensing layer 315 and two measurement electrodes arranged as a measurement interdigitated electrode (IDE) 330. The sensing layer 315 in this embodiment is a planar dielectric layer. The sensing layer 315 is functionalised on a part of the upper surface with capture species (not depicted) configured to specifically bind with the analyte provided on the upper surface to form a sensing surface 321. The capture species is provided on the regions of the sensing layer 315 within a boundary defined by the measurement IDE 330. The measurement IDE 320 interrogates the sensing layer 315 in this region to provide a measurement signal indicative of a property of the analyte.

In this embodiment, the measurement IDE 330 is formed from a first measurement electrode 331 and a second measurement electrode 332 arranged in an interdigitated configuration, as visible from the plan view of Fig. 1A. Specifically, the first measurement electrode 331 comprises a first connector 331a which extends along one side of the sensing layer 315 and from which plural first extension portions 331b extend perpendicularly. These first extension portions 331b are spaced apart from one another. The second measurement electrode 332 comprises a second connector 332a which extends along the opposite side of the sensing layer 315 to the first connector 331a and plural second extension portions 332b extend perpendicularly from the second connector 332a towards the first connector 331a. The second extension portions 332b are also spaced apart from one another but are staggered as compared to the first extension portions 331b. In this way, the second extension portions 332b are received between the first extension portions 331b to form the measurement IDE 330. This can be referred to as an interdigitated comb configuration. This allows the measurement IDE 330 to detect changes in the sensing layer 315 caused by interaction of analyte with the capture species.

The sensor assembly 300 further comprises a modification unit 335 which in this embodiment is a resistive heating unit. The modification unit 335 comprises a first modification electrode 336 and a second modification electrode 337 both provided on the sensing layer 315 adjacent the sensing surface 321 and coplanar with the measurement IDE 330. The set of modification electrodes in this embodiment is arranged with the first modification electrode 336 on a first side of the measurement IDE 330 and the second modification electrode 334 on the opposing side of the IDE 330. The modification unit 335 also comprises a resistive heating element 338 which is located on the back side of the sensing element behind the measurement IDE 330 and beneath the sensing surface and which extends between the first modification electrode 336 and second modification electrode 337 across the width of the sensing surface 321 (as seen in Fig. 5) and across the length across the whole of the sensing surface 321. Application of a voltage across the first modification electrode 336 and second modification electrode 337 causes generation of heat within the resistive heating element 338 to thereby heat the surrounding environment. In this embodiment, the arrangement of the resistive heating element 338 provides uniform heating of the sensing surface 321 and creates a localised region of increase heat (depicted as H).

By modifying the property of temperature, the rate of binding can be increased. This can reduce incubation speed and provide different responses depending on the species within the sample, thereby allowing kinetics (e.g. binding with a temporal aspect) to be studied.

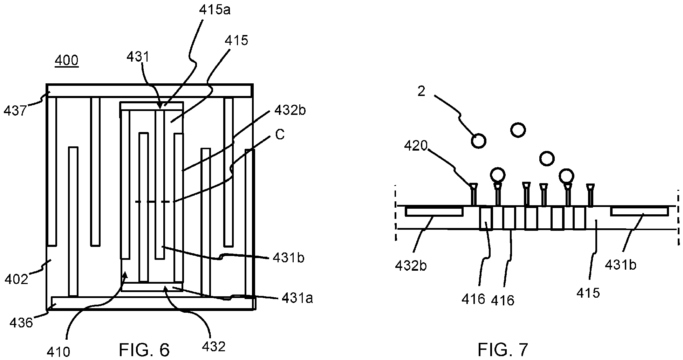

Figs. 6 and 7 schematically depict a further embodiment of a sensor assembly 400. Fig. 6 provides a schematic plan view of the sensor assembly 400 and Fig. 7 provides a schematic cross-sectional view of a part of the sensor assembly 100 along line C shown in Fig. 6. The sensor assembly 400 is similar in structure to the sensor assembly 100 of Fig. 1A in that it comprises a sensing element 410 which comprises a sensing layer 415 and two measurement electrodes 431, 432 arranged as a measurement interdigitated electrode (IDE) 430. Specifically, the measurement IDE 430 is formed from a first measurement electrode 431 and a second measurement electrode 432 arranged in an interdigitated configuration. The first measurement electrode 431 comprises a first connector 431a which extends along one side of the sensing layer 415 and from which plural first extension portions 431b extend perpendicularly. The second measurement electrode 432 comprises a second connector 432a which extends along the opposite side of the sensing layer 415 to the first connector 431a and plural second extension portions 432b extend perpendicularly from the second connector 432a towards the first connector 431a. The second extension portions 432b are received between the first extension portions 431b in an interdigitated comb configuration. The sensing layer 415 in this embodiment is functionalised on a part of the upper surface with capture species 420 configured to specifically bind with the analyte 2 provided on the upper surface to form a sensing surface 421. The measurement IDE 430 surrounds the sensing surface 421 of the sensing layer 415 and interrogates the sensing layer 415 in this region to provide a measurement signal indicative of a property of the analyte 2, as will be set out in more detail below.

The sensor assembly 400 also comprises a modification unit comprising a set of modification electrodes arranged as a modification IDE 435 with a first modification electrode 436 and a second modification electrode 437 both on the sensing layer 415 adjacent the sensing surface 421. The set of modification electrodes 435 is configured to modify a property of sample received on the sensing surface 421 in a localised region adjacent the sensing surface, in a similar manner as set out for the above-mentioned embodiments.

The set of modification electrodes in this embodiment is arranged as a modification IDE 435. Specifically, the modification IDE 435 is formed from a first modification electrode 436 and a second modification electrode 437 arranged in an interdigitated configuration. The first modification electrode 436 comprises a first connector 436a which extends along one side of the sensing layer 415 and from which plural first extension portions 436b extend perpendicularly. The second modification electrode 437 comprises a second connector 437a which extends along the opposite side of the sensing layer 415 to the first connector 436a and plural second extension portions 437b extend perpendicularly from the second connector 437a towards the first connector 435a. The second extension portions 437b are received between the first extension portions 436b to form the modification IDE 435.

However, unlike the sensor assembly 100 of Fig. 1A, the modification IDE 435 is arranged so that it surrounds the measurement IDE 430. That is, the measurement IDE 430 is received between one of the first extension portions 436b of the first modification electrode 436 and one of the second extension portions 437b of the second modification electrode 437b. This is advantageous for certain modification processes as the measurement IDE 430 is embedded within the modification IDE 435 and therefore the change in property caused by the modification IDE 435 will be local to and across the sensing surface 421.

The sensor assembly 400 of this embodiment also further differs from earlier embodiments in the structure of the sensing layer 415. The sensing layer 415 in this embodiment comprises a plurality of through holes 416 extending from an upper surface to a lower surface and across the sensing surface 421 (as can be seen in Fig. 7). The sensing layer 415 is suspended in a chamber such that fluid resides on both sides of the sensing layer 415 and with the through holes 416 providing for passage of fluid from the region above the sensing layer 415 to below the sensing layer 415. The capture species 420 are provided on the upper surface adjacent the through holes 416. The measurement IDE 430 is therefore provided with the through holes 416 of the sensing layer 415 between the interdigitated portions of the first measurement electrode 431 and second measurement electrode 432. The use of the sensing layer 415 with through holes 416, or pores, provides a particularly useful tool for determining a property of an analyte. The configuration of the sensing layer 415 and the capture species 420 is such that analyte that is specifically bound to the capture species is able to modify an impedimetric property (e.g. relative permittivity or dielectric constant (both referred to herein as "permittivity")) of the sensing layer. As such, the relative position of the analyte within or around the through hole can have a significant effect on the measurement signal and can provide detailed information on the particular analyte, in addition to the information provided by the selective binding of the analyte to the capture species. Prior to interaction of the sensing layer with the sample, the impedimetric property of the sensing layer is determined by the sensing layer and any fluid within the through holes. However, once a species is received within through hole(s), the species will cause a change in this impedimetric property. Depending on the analyte property and its modulation of the signal the property to be measured may be due to double layer change or interruption, sensing layer thickness increase, faradaic or non-faradaic processes, transfer of charge, charge storage, or charge induction. For example, when an analyte is bound to the capture species and can interact with the through hole, such as enter and traverse through the through hole, the analyte (and/or a tag or detection species, which may enable the interaction with the through holes) will contribute to the impedimetric property of the sensing layer. It will be appreciated that this could be present in any of the embodiments, and that it is not limited to a particular modification unit or measurement electrode structure.

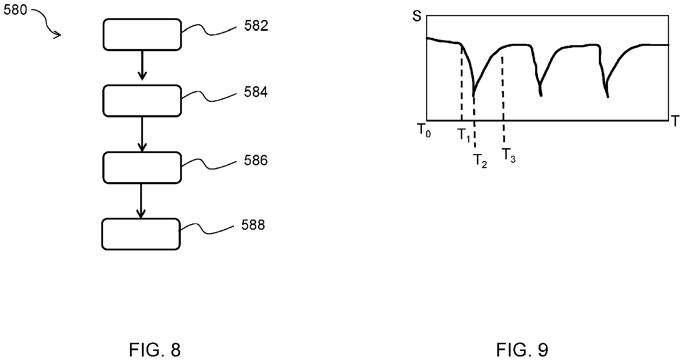

A method for determining a property of an analyte in a sample is schematically depicted in Fig. 8. The method comprises the steps of providing a sensor assembly for determining a property of an analyte in a sample 582, the sensor assembly comprising a sensing surface, a capture species configured to specifically bind with an analyte provided on the sensing surface, and at least one measurement electrode configured to provide a measurement signal indicative of a property of an analyte in a sample provided on the sensing surface; providing a sample to the sensing surface 584; modifying a property of at least a portion of the sample in a region adjacent the sensing surface 586; and determining a property of analyte in the sample on the sensing surface 588.

In one embodiment method, which can be carried out using the sensor assemblies of any of the embodiments disclosed herein (for example, using a control unit configured to perform these method steps), including those of Figs. 1A, 1B and 3 to 7 comprises further steps where the analyte and capture species are manipulated to more accurate determine a property, such as the presence or concentration of an analyte. Specifically, the method can comprise modifying the property of the sample in a region around the sensing surface to change the binding relationship and monitoring the measurement signal either before and/or during, and after the modification. This can be switching between states in which the analyte will bind to the capture species and a state where binding is prevented. The modification may alternate between these states, with measurements before and/or during, and after each modification. Measurement through the modification can be used to observe a fingerprint or response which is unique to the presence and amount of the target analyte. For example, the binding kinetics determined by the measurement signal (e.g. rate of binding ($k_{on}$), rate of dissociation ($k_{off}$)) can be particularly useful, for example confirming the presence of a particular analyte or distinguishing between closely related molecules (e.g. DNA where some of the DNA has a DNA mismatch).

Fig. 9 provides an exemplary graph depicting a signal over time where the method includes modifying the binding relationship by modifying a property of the sample in a region about the sensing surface. In the initial state of the sample between $T_0$ and $T_1$, the signal is at a first baseline level. In this example, this is a state in which the analyte and capture species do not bind at an appreciable level (relatively low binding affinity). At $T_1$, a property of the sample is modified using the modification unit such that the conditions are favourable for binding (relatively high binding affinity). At this point, the measurement signal changes indicating that the analyte is binding capture species. The shape of the measurement signal will provide information on the analyte. The method then comprises switching the property back to the unfavourable conditions (relatively low binding conditions) which is reflected in the signal change at $T_2$. The rate of change and shape of the response between $T_2$ and $T_3$, where the signal returns to the initial baseline level, will also provide information on dissociation. In this particular embodiment, this is repeated twice. This may be for confirmation and/or further intermediate steps may be carried out, such as flushing out non-binding species from the sample to further isolate the analyte.

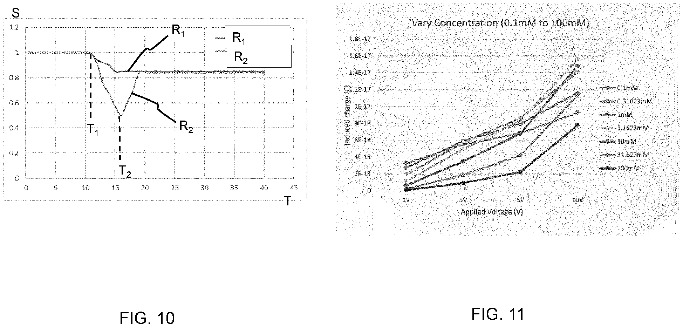

Fig. 10 provides a further exemplary graph depicting a signal over time (which can be capacitance). Sensor response line $R_1$ shows the signal where no local change occurs and sensor response line $R_2$ shows the position where the method includes modifying a property of the sample in a region about the sensing surface so as to modify the Debye length.

In both cases, the initial sensor response is shown up until $T_1$ at which point the sample containing the target analyte is added. When the sample is added but no modification occurs, there is a limited signal change in line $R_1$ as a result of the Debye length screen-

ing. In contrast, $R_2$ shows the situation where local modification, and in particular local conductivity change, occurs between $T_1$ and $T_2$ leading to an increased signal response. This improves the overall response and the ability of the sensor to detect the presence of the analyte. After $T_2$, the local change conditions are removed, conductivity returns to the bulk and the $R_2$ line tends back to the same position as the $R_1$ line.

Fig. 11 provides a graph showing data for a change in induced charge across different analyte concentrations (corresponding to the different lines) against applied voltage (V). Fig. 11 evidences the detectable change in induced charge as a result of changes in the concentration. This demonstrates, for example, that locally changing the conductivity (from 100mM to 0.1M) results in an increase in measurable induced charge (from 6e-18 to 1.6e-17 at an applied voltage of 10V - for example). These changes show that the methods of locally changing parameters, such as in Figs. 10 and 11, can be used to determine concentration. For example, where binding and debinding occurs, multiple changes in signal and the rate of change can be indicative of the concentration.

A particular implementation of embodiments methods disclosed herein, including those comprising binding and debinding such as that depicted in Fig. 9, is to distinguish between minor mutations or modifications of analyte species, such as biomolecules or structures. Specifically, there is a need to be able to distinguish between the types of modifications or differences which occur, either through modification or during synthesis, in species such as DNA or proteins. Traditional methods such as chromatography or mass spectroscopy focus on the mass and/or size of these species, making it different to distinguish where structural differences exist but where the mass or size differences are too small to reliably determine or filter out mismatches. This is particularly the case for biomolecules, where the relative size or mass of the total molecule is typically large as compared to the difference in physical size or mass resulting from the mismatch.

For example, in one embodiment of the methods, sensor assembly and systems disclosed herein, these can be used to identify DNA or RNA mismatches or differentiate/separate DNA or RNA based on the degree of differentiation. DNA or RNA mismatches can occur during the synthesis (e.g. by replication) of DNA or RNA where there is a mismatch between the original DNA or RNA and the synthesized version. This can be as a result of inserting an incorrect nt (or base pair) or deletion of a base pair, for example. Another example is a modification, for example as a result of glycosylation of the DNA/RNA. Such mismatches will alter the binding affinity between the capture species and the DNA or RNA (i.e. analyte) of interest due to a mismatch between the capture species and the analyte. A complete match will have a first binding affinity, some minor mismatch may still bind but with a lower affinity, and more mismatched bases will lead to no selective binding of the capture species and the DNA/RNA. Distinction between the binding components can be determined by manipulating the binding and debinding and monitoring the response and by modifying the conditions for binding affinity.

It should be understood that the detailed description and specific examples, while indicating exemplary embodiments of the apparatus, systems and methods, are intended for purposes of illustration only and are not intended to limit the scope. These and other features, aspects, and advantages of the apparatus, systems and methods of the present invention can be better understood from the description, appended claims or aspects, and accompanying drawings. It should be understood that the Figures are merely schematic and are not drawn to scale. It should also be understood that the same reference numerals are used throughout the figures to indicate the same or similar parts.

Other variations to the disclosed embodiments can be understood and effected by those skilled in the art in practicing the disclosure, from a study of the drawings, the disclosure, and the appended aspects or claims. In the aspects or claims, the word "comprising" does not exclude other elements or steps, and the indefinite article "a" or "an" does not exclude a plurality. The mere fact that certain measures are recited in mutually different dependent aspects or claims does not indicate that a combination of these measures cannot be used to advantage. Any reference signs in the claims should not be construed as limiting the scope.

Aspects of the invention will now be set out:

Aspect 1. A sensor assembly for determining a property of an analyte in a sample, the sensor assembly comprising: a sensing element comprising a sensing surface, a capture species configured to specifically bind with an analyte provided on the sensing surface, and at least one measurement electrode configured to provide a measurement signal indicative of a property of an analyte in a sample provided on the sensing surface; and a modification unit comprising a set of modification electrodes with at least a first modification electrode provided adjacent or on the sensing element, wherein the set of modification electrodes is configured to modify a property of at least a portion of a sample received on the sensing surface in a region adjacent the sensing surface.

Aspect 2. The sensor assembly of aspect 1, wherein the set of modification electrodes is configured to modify a property selected from at least one of pH, a thermal property, viscosity, electrical conductivity and/or ionic strength of the sample.

Aspect 3. The sensor assembly of aspect 1 or aspect 2, wherein the modification unit is configured to actuate the set of electrodes to modify a property of at least a portion of a sample received on the sensing surface in a region adjacent the sensing surface so as to modify a binding relationship between the capture species and the analyte.

Aspect 4. The sensor assembly of aspect 3, wherein the binding relationship modified by the modification unit is selected from at least one of the rate of binding between the capture species and the analyte ($K_{on}$), the rate of debinding between the capture species and the analyte ($K_{off}$), and/or the binding affinity ($K_D$).

Aspect 5. The sensor assembly of any preceding aspect, wherein the capture species comprises at least one aptamer selected from an oligonucleotide, a polynucleotide, a peptide, or a combination thereof.

Aspect 6. The sensor assembly of any preceding aspect, wherein the set of at least two modification electrodes of the modification unit are interdigitated.

Aspect 7. The sensor assembly of any preceding aspect, wherein the modification unit is configured to actuate the set of at least two electrodes so as to electrolyse water within the sample and thereby modify the pH of the sample.

Aspect 8. The sensor assembly of any preceding aspect, wherein the at least one measurement electrode of the sensing element defines the sensing surface.

Aspect 9. The sensor assembly of any preceding aspect, further comprising a substrate on which the sensing element is provided; and wherein the first modification electrode of the set of modification electrodes is provided on or in the substrate.

Aspect 10. The sensor assembly of any preceding aspect, wherein the modification unit is configured to modify a sample received on the sensing surface in a localised region adjacent the sensing surface, the localised region having a maximum distance from the sensing surface of 10 x length of the capture species.

Aspect 11. A system for determining a property of an analyte in a sample, the system comprising: a sensor assembly according to any preceding aspect; and a control unit configured to determine the property of the analyte based on the measurement signal from the sensing element.

Aspect 12. The system of aspect 11, wherein the control unit is further configured to operate the modification unit to actuate the modification electrodes to modify a property of at least a portion of a sample received on the sensing surface in a region adjacent the sensing surface and subsequently determine the property of the analyte based on the measurement signal from the sensing element.

Aspect 13. A method for determining a property of an analyte in a sample, the method comprising: providing a sensor assembly for determining a property of an analyte in a sample, the sensor assembly comprising a sensing surface, a capture species configured to specifically bind with an analyte provided on the sensing surface, and at least one measurement electrode configured to provide a measurement signal indicative of a property of an analyte in a sample provided on the sensing surface; providing a sample to the sensing surface; modifying a property of at least a portion of the sample in a region adjacent the sensing surface; and determining a property of analyte in the sample on the sensing surface.

Aspect 14. The method of aspect 13, wherein modifying a property of the sample in a region adjacent the sensing surface is carried out using a modification unit comprising a set of modification electrodes with at least a first modification electrode provided adjacent or on the sensing surface and wherein the set of modification electrodes is configured to modify the property of at least a portion of the sample.

Aspect 15. The method of aspect 13 or aspect 14, wherein the property is selected from at least one of pH, a thermal property, viscosity, electrical conductivity and/or ionic strength of the sample.

Aspect 16. The method of any of aspects 13 to 15, wherein modifying a property of at least a portion of a sample received on the sensing surface in a region adjacent the sensing surface comprises modifying the binding relationship between the capture species and the analyte.

Aspect 17. The method of aspect 16, wherein the binding relationship modified by the step of modifying a property of at least a portion of the sample in a region adjacent the sensing surface is selected from at least one of the rate of binding between the capture species and the analyte ($K_{on}$), the rate of debinding between the capture species and the analyte ($K_{off}$), and/or the binding affinity ($K_D$).

Aspect 18. The method of any of aspects 13 to 17, wherein the capture species are an aptamer selected from an oligonucleotide, a polynucleotide, a peptide, or a combination thereof.

Aspect 19. The method of any of aspects 13 to 18, wherein the step of modifying a property of at least a portion of the sample in a region adjacent the sensing surface comprises modifying the pH to a pH of between 6.5 and 8.

Aspect 20. The method of any of aspects 13 to 19, wherein the region adjacent the sensing surface is a localised region adjacent the sensing surface, the localised region having a maximum distance from the sensing surface of 10 × length of the capture species.

**Claims**

1. A sensor assembly for determining a property of an analyte in a sample, the sensor assembly comprising:

   a sensing element comprising a sensing surface, a capture species configured to specifically bind with an analyte provided on the sensing surface, and at least one measurement electrode configured to provide a measurement signal indicative of a property of an analyte in a sample provided on the sensing surface; and a modification unit comprising a set of modification electrodes with at least a first modification electrode provided adjacent or on the sensing element, wherein the set of modification electrodes is configured to modify a property of at least a portion of a sample received on the sensing surface in a region adjacent the sensing surface.

2. The sensor assembly of claim 1, wherein the set of modification electrodes is configured to modify a property selected from at least one of pH, a thermal property, viscosity, electrical conductivity and/or ionic strength of the sample.

3. The sensor assembly of claim 1 or claim 2, wherein the modification unit is configured to actuate the set of electrodes to modify a property of at least a portion of a sample received on the sensing surface in a region adjacent the sensing surface so as to modify a binding relationship between the capture species and the analyte, optionally wherein the binding relationship modified by the modification unit is selected from at least one of the rate of binding between the capture species and the analyte ($K_{on}$), the rate of debinding between the capture species and the analyte ($K_{off}$), and/or the binding affinity ($K_D$).

4. The sensor assembly of any preceding claim, wherein the set of at least two modification electrodes of the modification unit are interdigitated.

5. The sensor assembly of any preceding claim, wherein the modification unit is configured to actuate the set of at least two electrodes so as to electrolyse water within the sample and thereby modify the pH of the sample.

6. The sensor assembly of any preceding claim, wherein the modification unit is configured to modify a sample received on the sensing surface in a localised region adjacent the sensing surface, the localised region having a maximum distance from the sensing surface of 10 x length of the capture species.

7. A system for determining a property of an analyte in a sample, the system comprising:
a sensor assembly according to any preceding claim; and
a control unit configured to determine the property of the analyte based on the measurement signal from the sensing element.

8. The system of claim 7, wherein the control unit is further configured to operate the modification unit to actuate the modification electrodes to modify a property of at least a portion of a sample received on the sensing surface in a region adjacent the sensing surface and subsequently determine the property of the analyte based on the measurement signal from the sensing element.

9. A method for determining a property of an analyte in a sample, the method comprising:

providing a sensor assembly for determining a property of an analyte in a sample, the sensor assembly comprising a sensing surface, a capture species configured to specifically bind with an analyte provided on the sensing surface, and at least one measurement electrode configured to provide a measurement signal indicative of a property of an analyte in a sample provided on the sensing surface;
providing a sample to the sensing surface;
modifying a property of at least a portion of the sample in a region adjacent the sensing surface; and
determining a property of analyte in the sample on the sensing surface.

10. The method of claim 9, wherein modifying a property of the sample in a region adjacent the sensing surface is carried out using a modification unit comprising a set of modification electrodes with at least a first modification electrode provided adjacent or on the sensing surface and wherein the set of modification electrodes is configured to modify the property of at least a portion of the sample.

11. The method of claim 9 or claim 9, wherein the property is selected from at least one of pH, a thermal property, viscosity, electrical conductivity and/or ionic strength of the sample.

12. The method of any of claims 9 to 11, wherein modifying a property of at least a portion of a sample received on the sensing surface in a region adjacent the sensing surface comprises modifying the binding relationship between the capture species and the analyte.

13. The method of claim 12, wherein the binding relationship modified by the step of modifying a property of at least a portion of the sample in a region adjacent the sensing surface is selected from at least one of the rate of binding between the capture species and the analyte ($K_{on}$), the rate of debinding between the capture species and the analyte ($K_{off}$), and/or the binding affinity (KD).

14. The method of any of claims 9 to 13, wherein the step of modifying a property of at least a portion of the sample in a region adjacent the sensing surface comprises modifying the pH to a pH of between 6.5 and 8.

15. The method of any of claims 9 to 14, wherein the region adjacent the sensing surface is a localised region adjacent the sensing surface, the localised region having a maximum distance from the sensing surface of 10 x length of the capture species.

FIG. 1A

FIG. 1B

FIG. 2

200

237

235

238

236

220

221

290

230

250

FIG. 3

FIG. 4

FIG. 5

FIG. 6

FIG. 7

FIG. 8

FIG. 9

FIG. 10

FIG. 11

Europäisches
Patentamt

European
Patent Office

Office européen
des brevets

# EUROPEAN SEARCH REPORT

Application Number

EP 24 17 4228

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/226037 A1 (JOHNSON CHRISTOPHER [US] ET AL) 10 August 2017 (2017-08-10) * abstract; figures 1,3,35 * * paragraphs [0263] - [0266], [0269], [0270], [0309], [0359], [0452] * | 1-15 | INV. G01N27/327 |
| X | US 2023/097591 A1 (DORIS SEAN [US] ET AL) 30 March 2023 (2023-03-30) * abstract; claims 1,4,5,7,12; figures 1,3B * * paragraphs [0016], [0018] * | 1-4,6-15 | |

**TECHNICAL FIELDS SEARCHED (IPC)**

G01N

The present search report has been drawn up for all claims

| Place of search | Date of completion of the search | Examiner |
|---|---|---|
| The Hague | 3 September 2024 | Fernandes, Paulo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 4 459 274 A1

## ANNEX TO THE EUROPEAN SEARCH REPORT
## ON EUROPEAN PATENT APPLICATION NO.

EP 24 17 4228

03-09-2024

| Patent document cited in search report | Publication date | Patent family member(s) | | Publication date |
|---|---|---|---|---|
| US 2017226037 A1 | 10-08-2017 | EP | 3320107 A1 | 16-05-2018 |
| | | EP | 3708673 A1 | 16-09-2020 |
| | | US | 2017008825 A1 | 12-01-2017 |
| | | US | 2017205372 A1 | 20-07-2017 |
| | | US | 2017226037 A1 | 10-08-2017 |
| | | WO | 2017005587 A1 | 12-01-2017 |
| US 2023097591 A1 | 30-03-2023 | NONE | | |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JARMOSKAITELSHRAQ et al.** How to measure and evaluate binding affinities. *eLife,* 2020, vol. 9, e57264, https://doi.org/1 0.7554/eLife.57264
- **YLERA.** Off-rate screening for selection of high-affinity anti-drug antibodies. *Analytical Biochemistry,* 2013, vol. 441 (2), ISSN 0003-2697, 208-213
- **MONTEIRO ; KOPER.** Measuring local pH in electrochemistry. *Current Opinion in Electrochemistry,* February 2021, vol. 25, 100649